# FASCICULE DE BREVET EUROPEEN

(11) **EP 2 408 715 B1**
(45) Date de publication et mention de la délivrance du brevet: **12.06.2019**
(21) Numéro de dépôt: 10710016.6
(22) Date de dépôt: 18.03.2010
(51) Int. Cl.: C01F 7/44, C09K 11/02, C01F 7/02, H01J 61/44

(54) **ALUMINE ET PROCÉDÉS DE PRÉPARATION ASSOCIÉS**
ALUMINIUMOXID UND ZUGEHÖRIGE HERSTELLUNGSVERFAHREN
ALUMINA AND ASSOCIATED PRODUCTION METHODS

(30) Priorité: 20.03.2009 FR 0901317
(43) Date de publication de la demande: 25.01.2012
(73) Titulaire: Baikowski, 74330 Poisy (FR)
(72) Inventeur: BONNEAU, Lionel, F-74960 Cran Gevrier (FR)
(74) Mandataire: Croonenbroek, Thomas Jakob
(86) Numéro de dépôt international: PCT/EP2010/053500
(87) Numéro de publication internationale: WO 2010/106122

(56) Documents cités:
- EP-A- 0 250 616
- EP-A- 0 769 802
- FR-A1- 2 834 711
- GB-A- 1 456 310
- US-A- 4 026 816
- US-A- 4 818 515
- US-A- 6 159 441
- US-A1- 2005 248 276
- US-A1- 2006 022 580
- KORUDERLIEVA, S.; PLATCHKOVA, B.; TANEV, P.: "Influence of Inorganic Additives on the Modification Conversion gamma -> alpha-Al2O3", INTERCERAM, vol. 41, no. 7/8, 1992, pages 468-469, XP009127679,
- C. C. CHANG, ET AL.: "Synthesis of YAG:Ce phosphor via different aluminum sources and precipitation processes", JOURNAL OF ALLOYS AND COMPOUNDS, vol. 416, 2006, pages 265-269, XP002638732, Elsevier

## Description

La présente invention est dans le domaine des alumines et des luminophores et leurs préparations ainsi que des revêtements fluorescents en particulier pour la fabrication d'écrans d'affichage, d'un éclairage, de projecteurs, en particuliers des écrans à plasma ou à micropointes, des lampes pour le retro éclairage des écrans à cristaux liquides, des diodes électroluminescentes, des lampes d'éclairage à excitation plasma, des lampes trichromatiques.

Un tube fluorescent est réalisé sous sa forme classique d'un tube de verre fermé hermétiquement et remplie de la vapeur de mercure basse pression et de gaz rare comme du néon, de l'argon, ou du krypton. Des électrodes à l'intérieur du tube vont, en fonctionnement, émettre des électrons qui vont exciter le mélange gazeux à l'intérieur du tube et conduire à des émissions dans l'ultraviolet (par exemple aux alentours de 300nm).

Cette lumière ultraviolette est convertie en lumière visible grâce à un revêtement fluorescent déposé sur l'intérieur du tube.

Dans le cas d'un revêtement « monocouche », le revêtement comprend des particules de luminophores, par exemple connu sous le nom BAM, CAT ou YOx, ainsi que des particules d'alumine agissant comme réflecteurs.

Généralement, 80% de cette couche est composé de particules de luminophores et 20% de particules d'alumine ou de l'alumine de type gamma.

Les particules de luminophores ont en général une taille d₅₀ comprise entre 4µm et 10µm.

Or, il est connu que le coût des luminophores est prépondérant dans le coût global du revêtement.

Dans le cadre d'une thèse soutenu le 17 octobre 2008 à l'université de Paris 6 par Monsieur Serge Itjoko, une étude a été entamée pour d'une part pouvoir modéliser le comportement de couches fluorescentes et pour d'autre part identifier des voies d'optimisation en termes de rendement et de coût.

Il est ressorti en particulier de cette étude d'une couche mixte ou monocouche qu'une optimisation peut être atteinte en « choisissant des rayons de luminophores bien plus petits que ceux des luminophores existants, c'est-à-dire des rayons compris entre 04µm et 1,2µm et des rayons de grains d'alumine plus grands que ceux des grains d'alumine existants soit des rayons supérieurs à 0,6µm ».

Cette étude ne donne qu'un résultat théorique étant donné qu'il s'agit d'une étude théorique de modélisation, mais ne donne aucune indication comment de tels luminophores et particules d'alumine peuvent être obtenus. En particulier à la page 173 de cette thèse, il est dit que « les luminophores du commerce ont un rayon qui varie entre 3µm et 6µm » et que des luminophores de taille inférieure à cela n'ont pas encore été élaborés. A cet égard, le document US 4,026,816 divulgue un procédé de préparation par voie alun d'un luminophore aluminate. Le document US2006/0022580 s'intéresse à un luminophore de type YAG et de sa voie synthèse. Cette voie de synthèse utilise comme précurseurs un hydroxyde d'aluminium Al(OH)3 et un hydroxyde d'yttrium Y(OH)3. Par ailleurs, US6159441 divulgue des particules d'alumine alpha de forme sensiblement icosaédrique ou octaédrique, FR2834711 décrit un procédé de préparation d'alumine calcinée de haute pureté et GB1456310 décrit un procédé de préparation d'alumine alpha.

Il est un objet de la présente invention de pallier les inconvénients des revêtements connu et de proposer des formulations et procédés de préparation permettant d'atteindre les objectifs théoriques de l'étude précitée.

En particulier, l'invention a pour objet une alumine alpha composée essentiellement de particules ayant une taille d₅₀ comprise entre 0,3 µm et 2µm et une forme substantiellement sphérique.

Il est également décrit l'utilisation d'une alumine alpha composée essentiellement de particules ayant une taille d₅₀ comprise entre 0,3 µm et 2 µm et une forme substantiellement sphérique comme matrice pour un luminophore.

Il est également décrit l'utilisation d'une alumine alpha composée essentiellement de particules ayant une taille d₅₀ comprise entre 0,3 µm et 2µm et une forme substantiellement sphérique comme matrice pour un luminophore dans un revêtement pour des lampes fluorescentes.

L'invention a en outre pour objet un procédé de préparation d'une alumine du type alpha composée essentiellement de particules ayant une taille d₅₀ comprise entre 0,3 µm et 2µm et une forme substantiellement sphérique comprenant les opérations suivantes :
- on mélange de l'alumine gamma obtenue par la voie alun, un agent de frittage et des germes d'alumine alpha,
- on calcine le mélange dans un four à une température comprise entre 1150°C et 1400°C, notamment 1350°C, pendant une durée comprise entre 1h à 6h notamment 2h,
- on broie le mélange calciné,
- on passe le mélangé broyé au travers d'une grille en matière non contaminante de tamis entre 150µm et 250µm, notamment de 200µm.

L'invention peut comporter une ou plusieurs des caractéristiques suivantes prises seules ou en combinaison : Selon un aspect de l'invention, l'agent de frittage est du NH₄F.

Selon un autre aspect de l'invention, le mélange est composé en proportions de poids de 85 à 95 % d'alumine gamma obtenue par la voie alun, de 2,5 à 13% d'alumine alpha et de 0,4 à 1,8% de NH₄F. Selon encore un autre aspect de l'invention, le mélange est composé en proportions de poids d'environ 93,5 % d'alumine gamma obtenue par la voie alun, d'environ 5,5 % d'alumine alpha et d'environ 1 % de NH₄F. Selon un autre aspect de l'invention, on broie le mélange calciné dans un broyeur à boulets avec des billes de broyage en alumine au moins vingt fois supérieur en quantité au mélange calciné pendant 16h. Selon un aspect particulier, les billes de broyage en alumine ont un diamètre de l'ordre du cm, notamment entre 3cm et 5cm.

Il est également décrit un luminophore aluminate se présentant sous forme d'agglomérats de taille moyenne d'environ 10µm, ces agglomérats étant composés de particules de taille moyenne comprise entre 0,25µm et 1,5 µm.

Il est également décrit un aluminate se présentant sous forme d'une composition répondant à la formule:

a(M¹O).b(MgO).c(Al₂O₃) (1)

ou

a(M²O_{1.5}).b(MgO).c(Al₂O₃) (2)

dans laquelle M¹ désigne au moins un alcalino-terreux, M² l'yttrium ou le cérium et le terbium en combinaison et a, b et c sont des nombres entiers ou non vérifiant les relations: 0,25 ≤ a ≤ 4 ; 0 ≤ b ≤ 2 et 0,5 ≤ c ≤ 9; en ce que M¹ et M² sont partiellement substitué par de l'europium et au moins un autre élément appartenant au groupe des terres rares, plus particulièrement le néodyme, le terbium, le cérium, le dysprosium et le gadolinium. Le magnésium peut être partiellement substituable par Zn, Mn, Co et l'aluminium partiellement substituable par Ga, Sc, B, Ge et Si.

Il est également décrit un luminophore choisi dans le groupe comprenant du (Ce_{0,6}Tb_{0,4})MgAl₁₁O₁₉ ; du (Ba_{0,9}Eu_{0,1})MgAl₁₀O₁₇ ; du Y₃Al₅O₁₂ : Eu²⁺ ; du Y₃Al₅O₁₂ : Ce³⁺ ; du Y₂O₃ : Eu³⁺ ; du SrAl₁₂O₁₉ : Mn²⁺ ; du Zn₂SiO₄ : Mn²⁺.

Il est également décrit que le luminophore est de type BAM, CAT,YAG ou YOx.

Il est également décrit un procédé de préparation par voie alun d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm, comprenant les opérations suivantes :
- on mélange de l'alun d'ammonium avec au moins un additif à base d'une terre rare,
- on calcine ce mélange à une première température comprise entre 1100°C et 1200°C, en particulier 1150°C pendant une durée comprise entre 1h et 2h, en particulier 1h30,
- on passe le mélange calciné au travers d'une grille en matière non contaminante de tamis entre 150µm et 250µm, notamment de 200µm,
- on broie le mélange calciné et passé au tamis,
- on passe le mélange broyé au travers d'une grille en matière non contaminante de tamis entre 150µm et 250µm, notamment de 200µm,
- on calcine ce mélange broyé et tamisé à une seconde température comprise entre 1300°C et 1400°C, en particulier 1350°C pendant une durée comprise entre 3h et 5h, en particulier 4h,
- on broie le mélange calciné,
- on passe le mélange broyé au travers d'une grille en matière non contaminante de tamis entre 150µm et 250µm, notamment de 200µm.

Il est également décrit que l' on ajoute au mélange de l'alun d'ammonium - additif à base d'une terre rare un sulfate de magnésium heptahydraté,

Il est également décrit que l' on ajoute une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

Il est également décrit que l'additif à base de terre rare est un nitrate de terre rare M³(NO₃)₃, M³ étant une terre rare pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium.

Il est également décrit que pour la préparation du BAM, on ajoute au mélange comprenant de l'alun d'ammonium, l'additif à base d'une terre rare et le sulfate de magnésium heptahydraté, du sulfate de Baryum anhydre broyé pour d₅₀< 1 µm.

Il est également décrit un procédé de préparation, par voie d'imprégnation d'alumine, d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm, comprenant les opérations suivantes :
- on imprègne une première fois de l'alumine gamma chauffée par une première solution chauffée entre 80°C et 95°C notamment 90°C avec au moins un additif à base d'une terre rare,
- on soumet l'alumine gamma imprégnée à un premier traitement thermique de dénitration par échauffement à une première température comprise entre 500°C et 700°C, en particulier 600°C pendant une durée comprise entre 2h et 4h, en particulier 3h,
- on passe le résultat au travers d'une grille en matière non contaminante de tamis ≤ 500µm,
- on broie l'alumine imprégné, dénitré et tamisé,
- on passe le mélange broyé au travers d'une grille en matière non contaminante de tamis entre 150µm et 250µm, notamment de 200µm,
- on calcine ce mélange broyé et tamisé à une température comprise entre 1300°C et 1400°C, en particulier 1350°C pendant une durée comprise entre 3h et 5h, en particulier 4h,
- on broie le résultat,
- on passe le résultat au travers d'une grille en matière non contaminante de tamis entre 150µm et 250µm, notamment de 200µm.

Il est également décrit que, après la première imprégnation et le premier traitement de dénitration,
- on imprègne une seconde fois l'alumine imprégnée et dénitrée par une seconde solution chauffée entre 80°C et 95°C notamment 90°C avec au moins un additif à base d'une terre rare,
- on soumet l'alumine gamma imprégnée à un second traitement thermique de dénitration par échauffement à une première température comprise entre 500°C et 700°C, en particulier 600°C pendant une durée comprise entre 2h et 4h, en particulier 3h.

Il est également décrit que l' on ajoute une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

Il est également décrit que l'additif à base de terre rare est un nitrate de terre rare M³(NO₃)₃, M³ étant une terre rare pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium. Pour la préparation du BAM, on ajoute au mélange comprenant de l'alun d'ammonium, l'additif à base d'une terre rare et le sulfate de magnésium heptahydraté, du nitrate de Baryum.

Il est également décrit que l'alumine est préalablement chauffée à une température comprise entre 80°C et 150°C, notamment 120°C, pendant une durée comprise entre 10min et 2h.

Il est également décrit un procédé de préparation par voie d'imprégnation d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm, comprenant les opérations suivantes :
- on imprègne un spinelle d'alumine chauffée par une première solution chauffée entre 80°C et 95°C notamment 90°C avec au moins un additif à base d'une terre rare,
- on sèche le spinelle d'alumine imprégné à une température comprise entre 100°C et 150°C, notamment 120°C pendant une durée comprise entre 3h et 5h, notamment 4h,
- on passe le résultat séché au travers d'une grille en matière non contaminante de tamis ≤ 500µm,
- on soumet le spinelle d'alumine imprégné à un traitement thermique de dénitration par échauffement à une première température comprise entre 500°C et 700°C, en particulier 600°C pendant une durée comprise entre 2h et 4h, en particulier 3h,
- on broie le spinelle d'alumine imprégné et dénitré,
- on passe le mélange broyé au travers d'une grille en matière non contaminante de tamis entre 150µm et 250µm, notamment de 200µm,
- on calcine ce mélange broyé et tamisé à une température comprise entre 1300°C et 1400°C, en particulier 1350°C pendant une durée comprise entre 3h et 5h, en particulier 4h,
- on broie le résultat,
- on passe le résultat broyé au travers d'une grille en matière non contaminante de tamis entre 150µm et 250µm, notamment de 200µm.

Il est également décrit que, pour la préparation du BAM, on ajoute au mélange comprenant du spinelle d'alumine - l'additif à base d'une terre rare, du nitrate de baryum.

Il est également décrit que l' on ajoute une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

Il est également décrit que l'additif à base de terre rare est un nitrate de terre rare M³(NO₃)₃, M³ étant une terre rare pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium.

Il est également décrit que le spinelle d'alumine est préalablement chauffée à une température comprise entre 80°C et 150°C, notamment 120°C, pendant une durée comprise entre 10min et 2h.

Il est également décrit l'utilisation d'un luminophore tel que défini ci-dessus dans la fabrication d'écrans d'affichage, d'un éclairage, de projecteurs, en particuliers des écrans à plasma ou à micropointes, des lampes pour le retro éclairage des écrans à cristaux liquides, des diodes électroluminescentes, des lampes d'éclairage à excitation plasma, des lampes trichromatiques.

Il est également décrit un composé mixte alumine - luminophore comprenant entre 50 à 95% de l'alumine alpha composée essentiellement de particules ayant une taille d₅₀ comprise entre 0,3 µm et 2µm et une forme sphérique tel que défini ci-dessus et entre 5% à 50% d'un luminophore.

Selon un aspect de ce composé mixte le luminophore est un luminophore tel que défini ci-dessus.

Selon un autre aspect le luminophore est un aluminate se présentant sous forme d'une composition répondant à la formule:

a(M¹O).b(MgO).c(Al₂O₃) (1)

ou

a(M²O_{1.5}).b(MgO).c(Al₂O₃) (2)

dans laquelle M¹ désigne au moins un alcalino-terreux, M² l'yttrium ou le cérium et le terbium en combinaison et a, b et c sont des nombres entiers ou non vérifiant les relations: 0,25 ≤ a ≤ 4 ; 0 ≤ b ≤ 2 et 0,5 ≤ c ≤ 9; en ce que M¹ et M² sont partiellement substitué par de l'europium et au moins un autre élément appartenant au groupe des terres rares, plus particulièrement le néodyme, le terbium, le cérium, le dysprosium et le gadolinium. Le magnésium peut être partiellement substituable par Zn, Mn, Co et l'aluminium partiellement substituable par Ga, Sc, B, Ge et Si.

Il est également décrit que le luminophore est choisi dans le groupe comprenant du (Ce_{0,6}Tb_{0,4})MgAl₁₁O₁₉ ; du (Ba_{0,9}Eu_{0,1})MgAl₁₀O₁₇ ; du Y₃Al₅O₁₂ : Eu²⁺ ; du Y₃Al₅O₁₂ : Ce³⁺ ; du Y₂O₃ : Eu³⁺ ; du SrAl₁₂O₁₉ : Mn²⁺ ; du Zn₂SiO₄ : Mn²⁺.

Il est également décrit un procédé de préparation d'un composé mixte tel que défini ci-dessus, dans lequel
- on mélange entre 50 à 95% de l'alumine alpha composée essentiellement de particules ayant une taille d₅₀ comprise entre 0,3 µm et 2µm et une forme substantiellement sphérique et entre 5% à 50% d'un luminophore,
- on broie le mélange.

Il est également décrit l'utilisation du composé tel que défini ci-dessus dans la fabrication d'écrans d'affichage, d'un éclairage, de projecteurs, en particuliers des écrans à plasma ou à micropointes, des lampes pour le retro éclairage des écrans à cristaux liquides, des diodes électroluminescentes, des lampes d'éclairage à excitation plasma, des lampes trichromatiques.

Il est également décrit une suspension aqueuse pour la réalisation d'un revêtement pour lampes fluorescentes, notamment des tubes fluorescentes comprenant au moins un composé mixte tel que défini ci-dessus, du polyéthylène oxyde, de l'alumine gamma issu de la voie alun et de l'eau déminéralisé.

Selon un aspect de la suspension aqueuse, les proportions en poids sont :
- 25% à 50% au moins un composé mixte tel que défini ci-dessus,
- 0,5% à 5% du polyéthylène oxyde,
- 0,3% à 1,5% de l'alumine gamma issu de la voie alun,
- et le complément étant de l'eau déminéralisé.

Selon un autre aspect de la suspension aqueuse, elle comporte trois composés mixtes formant un ensemble trichromatique.

Selon un autre aspect de la suspension aqueuse, les trois composés mixtes sont présents en proportions de poids de
- entre 35% et 40%, de préférence de 38 % de composé mixte (Ce_{0,6}Tb_{0,4})MgAl₁₁O₁₉ - alumine alpha composée essentiellement de particules ayant une taille d₅₀ comprise entre 0,3 µm et 2µm et une forme sphérique;
- entre 10% et 15%, de préférence de 12% de composé mixte (Ba_{0,9}Eu_{0,1})MgAl₁₀O₁₇ - alumine alpha composée essentiellement de particules ayant une taille d₅₀ comprise entre 0,3 µm et 2µm et une forme sphérique,
- et le complément étant du composé mixte Y₂O₃ :Eu³⁺ - alumine alpha composée essentiellement de particules ayant une taille d₅₀ comprise entre 0,3 µm et 2µm et une forme sphérique.

D'autres caractéristiques sont décrites, en regard des figures annexées sur lesquelles :
- la figure 1 montre une photo au microscope électronique d'une alumine alpha composée essentiellement de particules ayant une taille d₅₀ comprise entre 0,3 µm et 2µm et une forme substantiellement sphérique,
- la figure 2 montre plusieurs spectres de diffraction lors de la fabrication d'un BAM,
- la figure 3 montre plusieurs spectres de diffraction lors de la fabrication d'un CAT, et
- la figure 4 montre plusieurs spectres de diffraction lors de la fabrication d'un YAG.

### Remarques générales :

Pour toutes les opérations de broyage, on traite une quantité unitaire dans un broyeur à boulets (par exemple un broyeur batch de marque SWECO® type DM1) avec des billes de broyage en alumine. La quantité des billes en alumine est au moins dix fois supérieure à celle de la quantité unitaire. En général, une quantité de billes de broyage en alumine de 20 fois supérieur à celle de la quantité unitaire à traiter a été retenue pour limiter le temps de broyage et optimiser le temps de tamisage.

Pour les opérations de passage au tamis, un tamis en matière non contaminante, par exemple en matière plastique, notamment en polyamide, a été choisi pour éviter toute contamination du passant. Par tamis ou grille de 200µm, par exemple, on entend un tamis dont les mailles de tamisage sont de 200µm de passant.

Pour les opérations de calcination, on utilise un four à passage à bruleurs gaz dont la température maximale est de 1200°C et le temps de séjour variable entre 1h et 3h et un four batch chauffage gaz dont la température maximale est de 1400°C et le temps de séjour adaptable.

Les mesures de spectres on été réalisés avec un X-Ray Diffractomètre : Rigaku® - model D/Max2200.

La photo de l'alumine alpha a été réalisée avec un Microscope Electronique : Philips® - Séries XL - modèle XL30.

Les mesures de taille de particules ont été réalisées soit par l'intermédiaire d'un granulomètre Sedigraph de marque Micromeritics® type 5100 série 809 soit avec un granulomètre à diffraction laser de marque Horiba® type LA920.

### 1. Alumine alpha

L'invention a pour objet une alumine alpha ayant une taille d₅₀ comprise entre 0,3 µm et 2µm et une forme substantiellement sphérique.

Le diamètre d₅₀ est défini comme étant le diamètre des particules pour lequel 50% du volume de la population est constitué de particules ayant un diamètre inférieur à cette valeur.

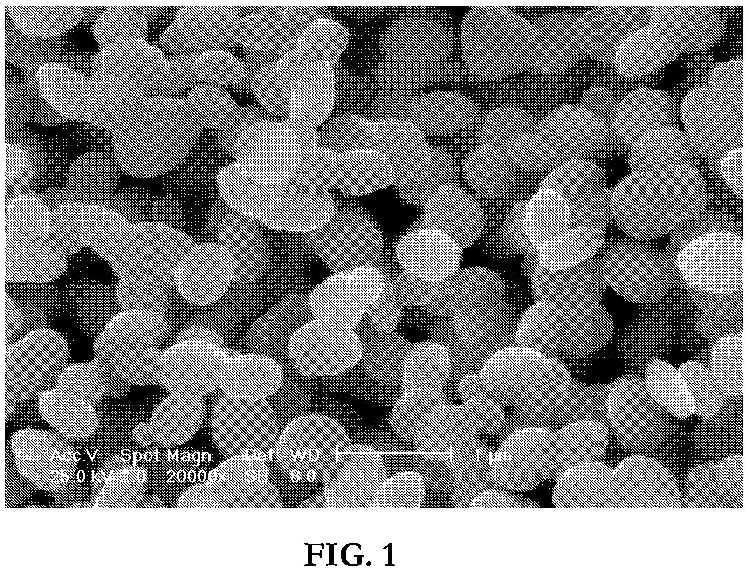

Une telle alumine est montrée sur la figure 1 en tant que photo au microscope électronique. On y voit que ces particules possèdent une forme substantiellement sphérique ou ellipsoïde, c'est-à-dire qu'il n'y a pratiquement pas d'arêtes.

De telle particule d'alumine alpha se prêtent particulièrement bien en tant que matrice pour des luminophores, notamment dans un revêtement, par exemple monocouche alumine - luminophore pour des lampes fluorescentes.

En effet, il s'avère que dans les lampes fluorescentes, de telles particules d'alumines ont une efficacité accrue en tant que réflecteur de la lumière ultraviolette issue de l'excitation du mélange gazeux par les électrodes et permettent de coupler plus efficacement cette lumière ultraviolette vers les particules de luminophores.

Cette nouvelle alumine ayant de meilleures propriétés de réflexion et de couplage de lumière dans des luminophores est par exemple réalisé selon le procédé de préparation suivant :
Selon une première étape, on mélange de l'alumine gamma obtenu par la voie alun, un agent de frittage et des germes d'alumine alpha. L'agent de frittage est par exemple du NH₄F.

Pour ce procédé, par l'alumine gamma obtenu par voie alun, on entend une alumine dont la structure cristalline est majoritairement composé de l'alumine gamma, notamment à plus de 80% voir 90% de l'alumine gamma.

Pour ce procédé, par germes d'alumine alpha, on entend des germes pur en alumine alpha ou majoritairement composé de l'alumine alpha, notamment à plus de 80% voir 90% de l'alumine alpha.

Le mélange est par exemple composé en proportions de poids de 85% à 95 % d'alumine gamma obtenu par la voie alun, de 2,5 à 13% d'alumine alpha et de 0,4 à 1,8% de NH₄F, plus spécifiquement, le mélange est composé en proportions de poids d'environ 93,5 % d'alumine gamma obtenu par la voie alun, d'environ 5,5 % d'alumine alpha et d'environ 1 % de NH₄F.

Puis selon une seconde étape, on calcine le mélange dans un four à une température comprise entre 1150°C et 1400°C, notamment 1350°C, pendant une durée comprise entre 1h à 6h, notamment 2h.

Lors d'une troisième étape, on broie le mélange calciné par exemple dans un broyeur à boulets avec des billes de broyage en alumine au moins dix fois supérieur en quantité au mélange calciné pendant une durée comprise entre 8h et 30h, notamment 16h.

Plus spécifiquement, on peut broyer le mélange calciné dans un broyeur à boulets avec des billes de broyage en alumine au moins vingt fois supérieur en quantité au mélange calciné pendant 16h.

Lors d'une quatrième étape, on passe le mélangé broyé au travers d'une grille en matière non contaminante , par exemple du plastique, de préférence en polyamide, de tamis entre 150µm et 250µm, notamment de 200µm.

### EXEMPLE 1 :

Pour obtenir environ 1kg d'alumine alpha composée essentiellement de particules ayant une taille d₅₀ comprise entre 0,3 µm et 2µm et une forme substantiellement sphérique, on a mélangé 1000g d'alumine gamma commercialisée sous le nom Baikalox® B105, 60g de l'alumine alpha commercialisée sous le nom Baikalox® BMA15 et de 10g de NH₄F.

L'alumine BMA15 possède la particularité que sa structure cristalline est composée à 100% d'alumine alpha de diamètre d₅₀ d'environ 150 nm.

Lors d'une seconde étape, ce mélange a été calciné par la suite à une température de 1350°C pendant 2h.

Lors d'une troisième étape, le mélange calciné a été broyé dans un broyeur à boulets avec des billes de broyage. Les billes de broyage en alumine ont un diamètre de l'ordre du cm, notamment entre 3cm et 5cm. La quantité de bille de broyage par rapport au mélange calciné était de vingt..

Lors de la quatrième et dernière étape, le résultat après broyage a été passé dans un tamis en polyamide de taille de 200µm de maille.

La figure 1 montre le résultat obtenu.

Selon un autre essai lors duquel la température de calcination était de 1200°C pendant 4h lors de la seconde étape, on a obtenue des particules d'alumine alpha ayant une taille d₅₀ de 1µm et une forme substantiellement sphérique avec une bonne homogénéité. Il s'est avéré qu'une température de calcination plus basse avec une durée de séjour plus longue confère une meilleure homogénéité de taille des particules d'alumine sphérique

### 2. Luminophore aluminate

A titre indicatif sont décrits des luminophores aluminate se présentant sous forme d'agglomérats de taille moyenne d'environ 10µm, ces agglomérats étant composés de particules de taille moyenne comprise entre 0,25 µm et 1,5 µm. Par taille moyenne, on entend généralement de diamètre d₅₀ défini ci-dessus. Ces luminophores sont des aluminates se présentant sous forme d'une composition répondant aux formules:

a(M¹O).b(MgO).c(Al₂O₃) (1)

ou

a(M²O_{1.5}).b(MgO).c(Al₂O₃) (2)

dans laquelle M¹ désigne au moins un alcalino-terreux, M² l'yttrium ou le cérium et le terbium en combinaison et a, b et c sont des nombres entiers ou non vérifiant les relations: 0,25 ≤ a ≤ 4 ; 0 ≤ b ≤ 2 et 0,5 ≤ c ≤ 9; en ce que M¹ et M² sont partiellement substitué par de l'europium et au moins un autre élément appartenant au groupe des terres rares, plus particulièrement le néodyme, le terbium, le cérium, le dysprosium et le gadolinium. Le magnésium peut être partiellement substituable par Zn, Mn, Co et l'aluminium partiellement substituable par Ga, Sc, B, Ge et Si.

A titre indicatif, le luminophore est choisi dans le groupe comprenant du (Ce_{0,6}Tb_{0,4})MgAl₁₁O₁₉ ; du (Ba_{0,9}Eu_{0,1})MgAl₁₀O₁₇ ; du Y₃Al₅O₁₂ : Eu²⁺ ; du Y₃Al₅O₁₂ : Ce³⁺ ; du Y₂O₃ : Eu³⁺ ; du SrAl₁₂O₁₉ : Mn²⁺ ; du Zn₂SiO₄ : Mn²⁺.

Le BAM, CAT et YOx en tant que ont des spectres d'émission visibles respectivement dans le bleue, vert et rouge ce qui par un mélange permet de réaliser des lampes trichromatiques. En tant que luminophore individuel, ils permettent par exemple de pixels d'écran ou de diodes émissives.

Pour la préparation de ces luminophores spécifiques nouveaux, on propose trois procédés alternatifs de préparation.

### 2.1. Préparation par voie alun d'un luminophore aluminate

Selon un procédé de préparation par voie alun d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm, on a procédé aux opérations suivantes. Lors d'une première étape, on mélange de l'alun d'ammonium avec au moins un additif à base d'une terre rare. L'additif à base de terre rare est un nitrate de terre rare M³(NO₃)₃, M³ étant une terre rare pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium.

En fonction du luminophore, il peut y avoir un seul nitrate de terre rare [par exemple dans la fabrication de BAM du Eu(NO₃)₃] ou plusieurs [par exemple du Tb(NO₃)₃ et Ce(NO₃)₃ pour la fabrication du CAT.

Selon un aspect particulier pour la préparation du BAM, on ajoute de plus du sulfate de baryum anhydre broyé pour d₅₀< 1 µm.

A ce mélange, en particulier pour la fabrication de BAM et CAT, on peut être amené à ajouter en plus du sulfate de magnésium heptahydraté (MgSO₄, 7H₂O) qui est disponible commercialement avec une grande pureté chimique. Le sulfate est le sel compatible avec l'alun d'ammonium dans ce procédé et en particulier compatible avec le traitement des gaz sortie four.

Lors d'une seconde étape, on calcine ce mélange à une première température comprise entre 1100°C et 1200°C, en particulier 1150°C pendant une durée comprise entre 1h et 2h, en particulier 1h30.

Lors d'une troisième étape, on passe le mélange calciné au travers d'une grille en matière non contaminante par exemple en matière plastique, notamment en polyamide, de tamis entre 150µm et 250µm, notamment de 200µm.

Lors d'une quatrième étape, on broie le mélange calciné et passé au tamis par exemple dans un broyeur à boulets avec des billes de broyage en alumine au moins dix fois supérieur en quantité au précurseur calciné entre 8h et 30h.

Puis, lors d'une cinquième étape, on passe le mélange broyé au travers d'une grille en matière non contaminante par exemple en matière plastique, notamment en polyamide, de tamis entre 150µm et 250µm, notamment de 200µm.

Lors d'une sixième étape, on calcine ce mélange broyé à une seconde température comprise entre 1300°C et 1400°C, en particulier 1350°C pendant une durée comprise entre 3h et 5h, en particulier 4h.

Lors d'une septième étape, on broie le résultat par exemple dans un broyeur à boulets avec des billes de broyage en alumine au moins dix fois supérieur en quantité au précurseur calciné entre 8h et 30h.

Lors d'une huitième étape, on passe le résultat au travers d'une grille en matière non contaminante par exemple en matière plastique, notamment en polyamide, de tamis entre 150µm et 250µm, notamment de 200µm.

Selon une neuvième étape en fonction du type de luminophore, en particulier pour le BAM et le CAT, on procède à une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

### Exemple 2 : procédé de préparation du BAM par voie alun (informatif)

Pour obtenir environ 1kg de BAM : EU (Ba_{0,9}Eu_{0,1})MgAl₁₀O₁₇, on mélange lors d'une première étape :
- 5833 g d'alun d'ammonium,
- 270 g de sulfate de Baryum anhydre (BaSO₄) broyé pour d50< 1 µ
- 308 g de sulfate de Magnésium heptahydraté (MgSO₄, 7H₂0), et
- 106.8 ml d'une solution de nitrate d'Europium Eu(NO₃)₃ à 233 g oxyde/l.

Lors d'une seconde étape, on a calciné ce mélange à une première température à 1150°C pendant une durée de 1h30.

Lors d'une troisième étape, on a passé ce mélange calciné au travers d'une grille en matière plastique en polyamide de tamis de 200µm.

Lors d'une quatrième étape, on a broyé le mélange calciné et passé au tamis dans un broyeur à boulets avec des billes de broyage en alumine en quantité vingt fois supérieur au résultat calciné pendant 8h. Lors d'une cinquième étape, on passe le mélange broyé au travers d'une grille en matière plastique, notamment en polyamide, de tamis entre 150µm et 250µm, notamment de 200µm.

Lors d'une sixième étape, on calcine ce mélange broyé et tamisé à une seconde température de 1350°C pendant une durée de 4h.

Lors d'une septième étape, on a broyé le résultat obtenu dans un broyeur à boulets avec des billes de broyage en quantité vingt fois supérieure au résultat calciné pendant 8h.

Lors d'une huitième étape, on a passé le mélange broyé au travers d'une grille en matière plastique, notamment en polyamide, de tamis entre 150µm et 250µm, notamment de 200µm.

Lors d'une neuvième étape, on a procédé à une étape finale de réduction par un gaz contenant de l'hydrogène, par exemple un mélange (95% N₂ et 5% H₂) avec une montée en température de 14 °C /min, et un palier d'au moins 1h à une température comprise de 1600°C à une pression d'environ 100mbar.

### Exemple 3 : procédé de préparation du CAT par voie alun (informatif)

Pour obtenir environ 1kg de CAT (Ce_{0,6}Tb_{0,4})MgAl₁₁O₁₉, on mélange lors d'une première étape :
- 6400 g Alun d'ammonium à 11,25% d'oxyde
- 335,64 g de Ce(NO₃)₃ cristallisé à 39,5% oxyde
- 423,22 g d'une solution de Tb(NO₃)₃ à 22,68% oxyde
- 315,55 g de MgSO₄, 7H₂O cristallisé à 16,4% oxyde

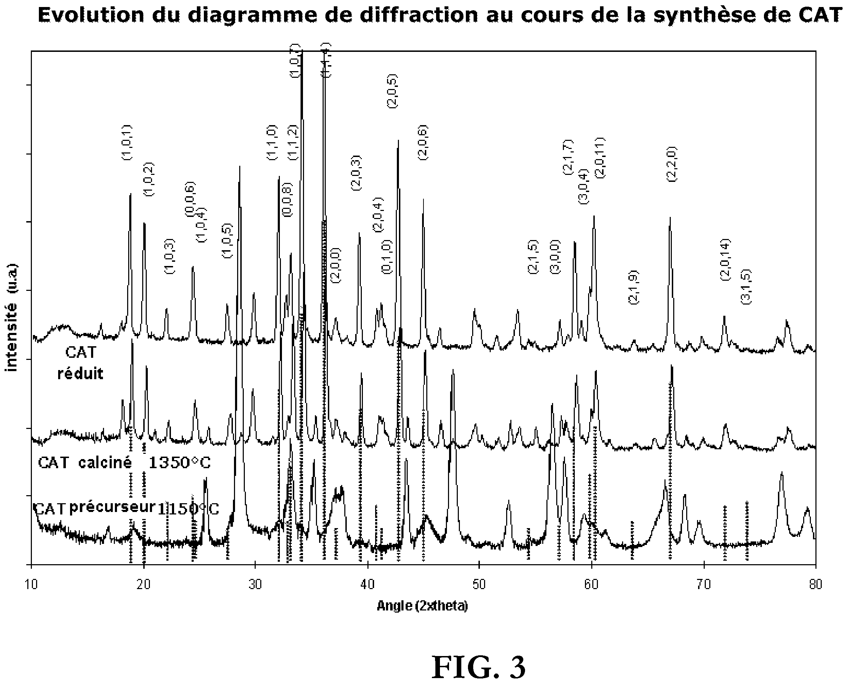

Lors d'une seconde étape, on a calciné ce mélange à une première température à 1150°C pendant une durée de 1h30 (voir spectre de diffraction de la figure 3 : CAT précurseur 1150°C).

Lors d'une troisième étape, on a passé ce mélange calciné au travers d'une grille en matière plastique en polyamide de tamis de 200µm.

Lors d'une quatrième étape, on a broyé le mélange calciné et passé au tamis avec des billes de broyage en alumine en quantité vingt fois supérieure au résultat calciné pendant 8h.

Lors d'une cinquième étape, on passe le mélange broyé au travers d'une grille en matière plastique, notamment en polyamide, de tamis entre 150µm et 250µm, notamment de 200µm.

Lors d'une sixième étape, on calcine ce mélange broyé et tamisé à une seconde température de 1350°C pendant une durée de 4h (voir spectre de diffraction de la figure 3 : CAT calciné 1350°C).

Lors d'une septième étape, on a broyé le résultat obtenu dans un broyeur à boulets avec des billes de broyage en alumine en quantité vingt fois supérieure au résultat calciné pendant 8h.

Lors d'une huitième étape, on a passé le mélange broyé au travers d'une grille en matière plastique, notamment en polyamide, de tamis entre 150µm et 250µm, notamment de 200µm.

Lors d'une neuvième étape, on a procédé à une étape finale de réduction par un gaz contenant de l'hydrogène, par exemple un mélange (95% N₂ et 5% H₂) avec une montée en température de 14 °C /min, et un palier d'au moins 1h à une température comprise de 1600°C à une pression d'environ 100mbar (voir spectre de diffraction de la figure 3 : CAT réduit).

Le spectre de diffraction du produit réduit ne révèle pas d'espèces cristallisées autres que le luminophore CAT.

### Exemple 4 : procédé de préparation du YAG par voie alun (informatif)

Pour obtenir environ 1kg de YAG:Ce soit Y₃Al₅O₁₂ : Ce³⁺, on mélange lors d'une première étape :
- 3833 g d'alun d'ammonium
- 570 g d'une solution de nitrate d'Yttrium Y(NO3)3 à 359 g/l
- 4,4 g d'une solution de nitrate de cérium Ce(NO₃)₃ à 19.2%

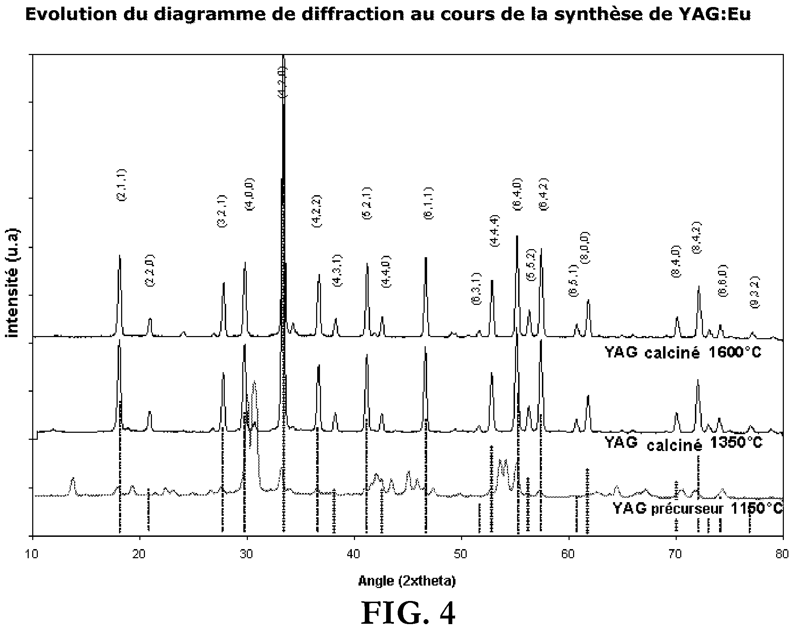

Lors d'une seconde étape, on a calciné ce mélange à une première température à 1150°C pendant une durée de 1h30 (voir spectre de diffraction de la figure 4 : YAG précurseur 1150°C).

Lors d'une troisième étape, on a passé ce mélange calciné au travers d'une grille en matière plastique en polyamide de tamis de 200µm.

Lors d'une quatrième étape, on a broyé le mélange calciné et passé au tamis dans un broyeur à boulets avec des billes de broyage en alumine en quantité vingt fois supérieure au résultat calciné pendant 8h.

Lors d'une cinquième étape, on passe le mélange broyé au travers d'une grille en matière plastique, notamment en polyamide, de tamis entre 150µm et 250µm, notamment de 200µm.

Lors d'une sixième étape, on calcine ce mélange broyé et tamisé à une seconde température de 1350°C pendant une durée de 4h (voir spectre de diffraction de la figure 3 : YAG calciné 1350°C).

Lors d'une septième étape, on a broyé le résultat obtenu dans un broyeur à boulets avec des billes de broyage en alumine en quantité vingt fois supérieure au résultat calciné pendant 8h.

Lors d'une huitième étape, on a passé le mélange broyé au travers d'une grille en matière plastique, notamment en polyamide, de tamis entre 150µm et 250µm, notamment de 200µm.

Le spectre de diffraction ne met pas en évidence d'autres espèces cristallisées que le luminophore YAG.

On notera que selon le même procédé peuvent être élaborés les YAG dopés Eu³⁺, Tb⁴⁺ ou Gd³⁺, et mixtes des deux derniers dopants. On notera que selon le même procédé peuvent être élaborés les YAG dopées Ni²⁺, V²⁺, Co²⁺ qui nécessitent une étape finale de réduction selon le protocole défini précédemment.

De façon plus générale le YAG peut être dopés entre 0.1 et 5% en cations d'éléments de transition, sous leur forme oxydée ou réduite. La voie alun est particulièrement propice à leur incorporation dans la maille cubique du YAG.

### 2.2. Préparation par voie d'imprégnation d'une alumine gamma d'un luminophore aluminate

En alternative de la voie alun, il est proposé un procédé de préparation par voie d'imprégnation d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm.

Lors d'une première étape de ce procédé, on imprègne une première fois de l'alumine gamma chauffée par une première solution de sels d'alcalino-terreux baryum et magnésium chauffée entre 80°C et 95°C notamment 90°C avec au moins un additif à base d'une terre rare.

L'additif à base de terre rare est un nitrate de terre rare M³(NO₃)₃, M³ étant une terre rare seule ou en mélange pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium.

Pour la préparation du BAM, la solution d'imprégnation, outre l'additif à base d'une terre rare , comprend du sulfate de magnésium du nitrate de Baryum

Pour la préparation du CAT, on ajoute au mélange de l'alun d'ammonium - la solution d'imprégnation, outre additif à base d'une terre rare, comprend du sulfate de magnésium.

Cette imprégnation se trouve améliorée quand l'alumine est préalablement chauffée à une température comprise entre 80°C et 150°C, notamment 120°C, pendant une durée comprise entre 10min et 2h.

Puis lors d'une seconde étape, on soumet l'alumine gamma imprégnée à un premier traitement thermique de dénitration par échauffement à une première température comprise entre 500°C et 700°C, en particulier 600°C pendant une durée comprise entre 2h et 4h, en particulier 3h.

Lors d'une troisième étape, on passe l'alumine imprégnée et dénitrée au travers d'une grille en matière non contaminante par exemple en matière plastique, notamment en polyamide, de tamis ≤ 500µm. Cette étape permet d'éviter d'éventuels bouts de creusets résiduels que l'on ne veut pas entrainer dans l'étape suivante de broyage..

Lors d'une quatrième étape, on broie le résultat par exemple dans un broyeur à boulets avec des billes de broyage en alumine au moins dix fois supérieur en quantité à l'alumine imprégnée et dénitrée entre 8h et 30h.

Lors d'une cinquième étape, on calcine ce mélange broyé à une température comprise entre 1300°C et 1400°C, en particulier 1350°C pendant une durée comprise entre 3h et 5h, en particulier 4h.

Lors d'une sixième étape, on broie le résultat par exemple dans un broyeur à boulets avec des billes de broyage en alumine au moins dix fois supérieur en quantité au précurseur calciné entre 8h et 30h.

Lors d'une septième étape, on passe le résultat au travers d'une grille en matière non contaminante par exemple en matière plastique, notamment en polyamide, de tamis entre 150µm et 250µm, notamment de 200µm.

Lors d'une huitième étape en fonction du type de luminophore (par exemple pour le BAM et le CAT), on procède à une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

En particulier pour le BAM, il s'est avéré judicieux d'ajouter une seconde imprégnation.

Par conséquent, après la première imprégnation et le premier traitement de dénitration, on peut intercaler les étapes consistant à
- imprégner une seconde fois l'alumine imprégnée et dénitrée dans une seconde solution chauffée entre 80°C et 95°C notamment 90°C avec au moins un additif à base d'une terre rare,
- soumettre l'alumine gamma imprégnée à un second traitement thermique de dénitration par échauffement à une première température comprise entre 500°C et 700°C, en particulier 600°C pendant une durée comprise entre 2h et 4h, en particulier 3h.

### Exemple 5 : procédé de préparation du BAM par voie d'imprégnation d'alumine gamma (informatif)

Pour obtenir environ 1kg de BAM, lors d'une première étape de ce procédé, on a imprégné une première fois 750g d'alumine gamma (commercialement disponible comme Baikalox® B105 et ayant une structure cristalline 100% gamma et une taille moyenne d₅₀ d'environ 6µm) chauffée à 120°C par 1825 ml d'une solution chauffée à 90°C contenant:
- 205,3 g de Ba nitrate à 59.3% en oxyde,
- 254,16 g de Mg nitrate hexa hydraté à 14% en oxyde et
- 39,42 g de Eu nitrate à 39.4 % en oxyde.

Puis lors d'une seconde étape, on soumet l'alumine gamma imprégnée à un premier traitement thermique de dénitration par échauffement à une première température à 600°C pendant une durée de 3h. Lors d'une troisième étape, on a imprégné une seconde fois l'alumine imprégnée et dénitrée par 1125 ml d'une solution chauffée à 90°C contenant :
- 136,9 g de Ba nitrate à 59.3% en oxyde,
- 169,44 g de Mg nitrate hexa hydraté à 14% en oxyde et
- 26,28 g de Eu nitrate à 39.4 % en oxyde.

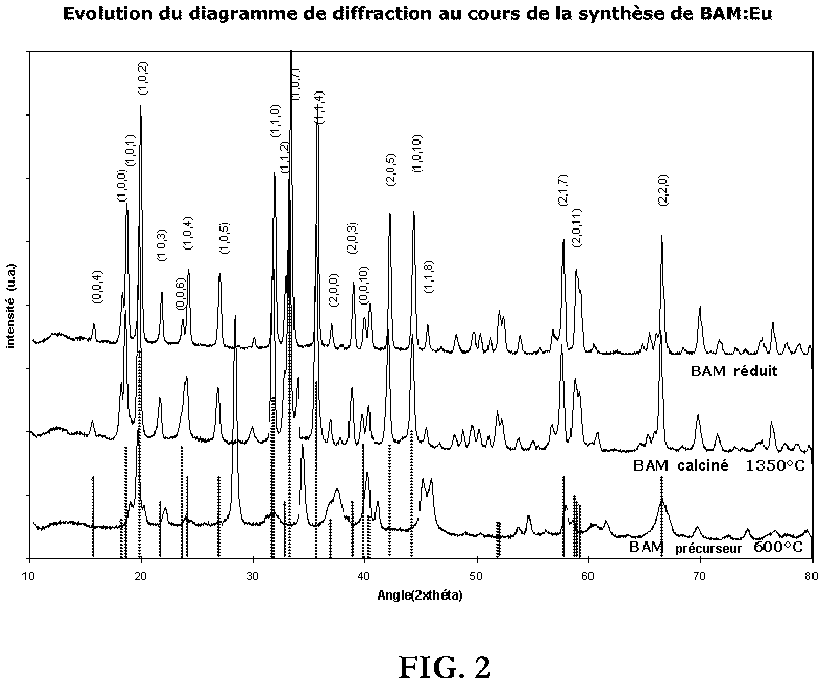

Lors d'une quatrième étape, on a soumis l'alumine gamma imprégnée à un second traitement thermique de dénitration par échauffement à une première température à 600°C pendant une durée de 3h (voir spectre de diffraction de la figure 2, BAM precurseur 600°C).

Lors d'une cinquième étape, on broie le résultat dans un broyeur à boulets avec des billes de broyage en alumine en quantité vingt fois supérieure au résultat calciné pendant 16h.

Lors d'une sixième étape, on passe le mélange broyé au travers d'une grille en matière plastique, notamment en polyamide, de tamis entre 150µm et 250µm, notamment de 200µm.

Lors d'une septième étape, on calcine ce mélange broyé à une température de 1350°C pendant une durée de 3h (voir spectre de diffraction de la figure 2, BAM calciné 1350°C).

Lors d'une huitième étape, on broie dans un broyeur à boulets avec des billes de broyage en alumine en quantité vingt fois supérieure au résultat calciné pendant 16h.

Lors d'une neuvième étape, on passe le résultat au travers d'une grille en matière plastique, notamment en polyamide, de tamis entre 150µm et 250µm, notamment de 200µm.

Lors d'une dixième étape on procède à une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar (voir spectre de diffraction de la figure 2, BAM réduit)

### Exemple 6 : procédé de préparation du CAT par voie d'imprégnation d'alumine gamma (informatif)

Pour obtenir environ 1kg de CAT, lors d'une première étape de ce procédé, on a imprégné 720g de l'alumine gamma (commercialement disponible comme Baikalox® B105 et ayant une structure cristalline 100% gamma et une taille moyenne d₅₀ d'environ 6µm)
par une solution de :
- 360 ml d'une solution de Ce(NO₃)₃ à 368.3 g/l en oxyde,
- 258 ml d'une solution de Tb(NO₃)₃ à 372 g/l en oxyde,
- 576 ml d'une solution de MgSO₄ à 89.8 g/l en oxyde.

Puis lors d'une seconde étape, on soumet l'alumine gamma imprégnée à un premier traitement thermique de dénitration par échauffement à une première température à 600°C pendant une durée de 3h. Lors d'une troisième étape, on broie le résultat dans un broyeur à boulets avec des billes de broyage en alumine en quantité vingt fois supérieure au résultat calciné pendant 16h.

Lors d'une quatrième étape, on passe le mélange broyé au travers d'une grille en matière plastique, notamment en polyamide, de tamis entre 150µm et 250µm, notamment de 200µm.

Lors d'une cinquième étape, on calcine ce mélange broyé à une température de 1350°C pendant une durée de 3h (voir spectre de diffraction de la figure 2, BAM calciné 1350°C).

Lors d'une sixième étape, on broie le résultat dans un broyeur à boulets avec des billes de broyage en alumine en quantité vingt fois supérieure au résultat calciné pendant 16h.

Lors d'une septième étape, on passe le résultat broyé au travers d'une grille en matière plastique, notamment en polyamide, de tamis entre 150µm et 250µm, notamment de 200µm.

Lors d'une huitième étape, on procède à une étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar (voir spectre de diffraction de la figure 2, BAM réduit)

### 2.3. Préparation par voie d'imprégnation d'un spinelle d'alumine d'un luminophore aluminate :

En variante, il est également proposé un procédé de préparation par voie d'imprégnation d'un spinelle d'alumine d'un luminophore aluminate tel que défini ci-dessus se présentant sous forme d'agglomérats de taille moyenne d'environ 10µm, ces agglomérats étant composés de particules de taille moyenne comprise entre 0,25 et 1,5 µm. Ce procédé comprend les opérations suivantes :
Selon une première étape, on imprègne un spinelle d'alumine chauffée par une première solution chauffée entre 80°C et 95°C notamment 90°C avec au moins un additif à base d'une terre rare.

De tels spinelles d'alumine ont été décrit dans le document US 6 251 150.

Il s'est avéré judicieux que le spinelle d'alumine soit préalablement chauffé à une température comprise entre 80°C et 150°C, notamment 120°C, pendant une durée comprise entre 10min et 2h.

L'additif à base de terre rare est par exemple un nitrate de terre rare M³(NO₃)₃, M³ étant une terre rare seule ou en mélange pris dans le groupe lanthane, cérium, praséodyme, néodyme, prométhium, samarium, europium, gadolinium, terbium, dysprosium, holmium, erbium, thulium, ytterbium, lutécium, l'yttrium ou le scandium.

Pour la préparation du BAM, on ajoute à la solution d'imprégnation du spinelle d'alumine contenant l'additif à base d'une terre rare, du nitrate de Baryum.

Selon une seconde étape, on sèche le spinelle d'alumine imprégné à une température comprise entre 100°C et 150°C, notamment 120°C pendant une durée comprise entre 3h et 5h, notamment 4h.

Puis selon une troisième étape, on passe le résultat séché au travers d'une grille en matière non contaminante par exemple en matière plastique, notamment en polyamide, de tamis ≤ 500µm.

Selon une quatrième étape, on soumet le spinelle d'alumine imprégné à un traitement thermique de dénitration par échauffement à une première température comprise entre 500°C et 700°C, en particulier 600°C pendant une durée comprise entre 2h et 4h, en particulier 3h.

Selon une cinquième étape, on broie le spinelle d'alumine imprégné et dénitré par exemple dans un broyeur à boulets avec des billes de broyage en alumine au moins dix fois supérieur en quantité au précurseur calciné entre 8h et 30h.

Selon une sixième étape, on passe le résultat broyé au travers d'une grille en matière non contaminante par exemple en matière plastique, notamment en polyamide, de tamis entre 150µm et 250µm, notamment de 200µm. Selon une septième étape, on calcine ce mélange broyé et tamisé à une température comprise entre 1300°C et 1400°C, en particulier 1350°C pendant une durée comprise entre 3h et 5h, en particulier 4h.

Selon une huitième étape, on broie le résultat par exemple dans un broyeur à boulets avec des billes de broyage en alumine au moins dix fois supérieur en quantité au précurseur calciné entre 8h et 30h, en particulier 16h. Selon une neuvième étape, on passe le résultat broyé au travers d'une grille en matière plastique, notamment en polyamide, de tamis entre 150µm et 250µm, notamment de 200µm.

Selon encore un autre aspect, on ajoute en fonction du luminophore une dixième étape finale de réduction par un gaz contenant de l'hydrogène avec une montée en température comprise entre 10°C - 20 °C /min, notamment 14 °C /min, et un palier d'au moins 1h à une température comprise entre 1500 °C et 1600°C à une pression d'environ 100mbar.

### Exemple 7 : procédé de préparation du BAM par voie d'imprégnation de spinelle d'alumine (informatif)

Pour obtenir environ 1kg de BAM, selon une première étape, on a imprégné 750g spinelle d'alumine (5Al₂O₃, MgO) chauffé préalablement à une température de 120°C dans 1,66 litre d'une solution chauffée à 90°C contenant :
- 320.75 g de nitrate de Baryum à 59,3% en oxyde, et
- 98 ml d'une solution de nitrate d'Europium à 247.4 g oxyde/l.

De tels spinelles d'alumine ont été décrit dans le document US 6 251 150, mais peuvent aussi être obtenu en mélangeant, en respectant les proportions, 7000g d'alun d'ammonium et 376,7g de Mg(SO₄)*7H₂O et en calcinant ce mélange à une température comprise entre 1100°C et 1200°C, notamment 1150°C pendant une durée comprise entre 1h à 2h, notamment 1h30.

Selon une seconde étape, on a séché le spinelle d'alumine imprégné à une température de 120°C pendant une durée de 4h.

Puis selon une troisième étape, on a passé le résultat séché au travers d'une grille en matière plastique, notamment en polyamide, de tamis ≤ 500µm.

Selon une quatrième étape, on a soumis le spinelle d'alumine imprégné à un traitement thermique de dénitration par échauffement à une première température de 600°C pendant une durée de 3h.

Selon une cinquième étape, on a broyé le spinelle d'alumine imprégné et dénitré dans un broyeur à boulets avec des billes de broyage en alumine en quantité vingt fois supérieure au résultat pendant 16h.

Selon une sixième étape, on a passé le résultat broyé au travers d'une grille en matière plastique, notamment en polyamide, de tamis de 200µm de maille.

Selon une septième étape, on a calciné ce mélange broyé et tamisé à une température de 1350°C pendant une durée comprise de 4h.

Selon une huitième étape, on a broyé le résultat dans un broyeur à boulets avec des billes de broyage en alumine en quantité vingt fois supérieure au résultat pendant 16h.

Selon une neuvième étape, on a passé le résultat broyé au travers d'une grille en matière plastique, notamment en polyamide, de tamis de 200µm de maille.

Selon une dixième étape finale de réduction par un gaz composé de 95% N₂ et 5% H₂ avec une montée en température comprise entre de 14 °C /min, et un palier d'une heure à une température comprise entre de 1600°C à une pression d'environ 100mbar.

Les luminophores tel que défini ci-dessus peuvent être utilisé dans la fabrication d'écrans d'affichage, d'un éclairage (lampes fluorescentes), de projecteurs, en particuliers des écrans à plasma ou à micropointes, des lampes pour le retro éclairage des écrans à cristaux liquides, des diodes électroluminescentes, des lampes d'éclairage à excitation plasma, des lampes trichromatiques.

### 3. Composé mixte alumine - luminophore

En particulier pour la fabrication de lampes fluorescentes monocouche, on propose un composé mixte alumine - luminophore comprenant entre 50 à 95% de l'alumine alpha ayant une taille d₅₀ comprise entre 0,3 µm et 2µm et une forme sphérique tel que défini ci-dessus et entre 5% à 50% d'un luminophore.

Le luminophore est un aluminate se présentant sous forme d'une composition répondant à la formule:

a(M¹O).b(MgO).c(Al₂O₃) (1)

ou

a(M²O_{1.5}).b(MgO).c(Al₂O₃) (2)

dans laquelle M¹ désigne au moins un alcalino-terreux, M² l'yttrium ou le cérium et le terbium en combinaison et a, b et c sont des nombres entiers ou non vérifiant les relations: 0,25 ≤ a ≤ 4 ; 0 ≤ b ≤ 2 et 0,5 ≤ c ≤ 9; en ce que M¹ et M² sont partiellement substitué par de l'europium et au moins un autre élément appartenant au groupe des terres rares, plus particulièrement le néodyme, le terbium, le cérium, le dysprosium et le gadolinium. Le magnésium peut être partiellement substituable par Zn, Mn, Co et l'aluminium partiellement substituable par Ga, Sc, B, Ge et Si.

Il est décrit que le luminophore est choisi dans le groupe comprenant du (Ce_{0,6}Tb_{0,4})MgAl₁₁O₁₉ ; du (Ba_{0,9}Eu_{0,1})MgAl₁₀O₁₇ ; du Y₃Al₅O₁₂ : Eu²⁺ ; du Y₃Al₅O₁₂ : Ce³⁺ ; du Y₂O₃ : Eu³⁺ ; du SrAl₁₂O₁₉ : Mn²⁺; du Zn₂SiO₄ : Mn²⁺.

Comme luminophore, il est possible d'utiliser des luminophores de commerce et ce composé mixte présente un coût moindre à performance équivalente de par de sa composition. Ceci est possible grâce aux meilleurs propriétés de réflexion des particules d'alumine alpha.

Il est encore plus préférable d'utiliser un luminophore tel que défini ci-dessus aux points 2, 2.1, 2.2 et 2.3.

Ce composé mixte peut être préparé par un procédé de préparation, dans lequel
- on mélange entre 50 à 95% de l'alumine alpha composée essentiellement de particules ayant une taille d₅₀ comprise entre 0,3 µm et 2µm et une forme substantiellement sphérique et entre 5% à 50% d'un luminophore,
- on broie le mélange par exemple dans un broyeur à boulets avec des billes de broyage en alumine au moins dix fois supérieur en quantité au mélange entre 8h et 30h.
- on passe le résultat broyé au travers d'une grille en matière non contaminante par exemple en matière plastique, notamment en polyamide, de tamis entre 150µm et 250µm, notamment de 200µm.

Selon une variante un broyage de type jet d'air peut être envisagé, par exemple par un broyeur jet d'air à assiette « type Alpine ».

Il est décrit l'utilisation du composé mixte tel que défini ci-dessus dans la fabrication d'écrans d'affichage, d'un éclairage, de projecteurs, en particuliers des écrans à plasma ou à micropointes, des lampes pour le retro éclairage des écrans à cristaux liquides, des diodes électroluminescentes, des lampes d'éclairage à excitation plasma, des lampes trichromatiques.

Il est décrit une suspension aqueuse pour la realisation d'un revêtement pour lampes fluorescentes, notamment des tubes fluorescentes comprenant au moins un composé mixte tel que défini ci-dessus, du polyéthylène oxyde, de l'alumine gamma issu de la voie alun et de l'eau déminéralisé.

Les proportions en poids dans la solution aqueuse sont :
- 25% à 50% au moins du composé mixte tel que défini ci-dessus,
- 0,5 % à 5% de polyéthylène oxyde,
- 0,3% à 1,5% d'alumine gamma issu de la voie alun,
- et le complément étant de l'eau déminéralisé.

Cette solution aqueuse peut comporter trois composés mixtes différents formant un ensemble trichromatique. Par exemple, les trois composés mixtes peuvent être présents en proportions de poids de
- entre 35% et 40%, de préférence de 38 % de composé mixte (Ce_{0,6}Tb_{0,4})MgAl₁₁O₁₉ - alumine alpha composée essentiellement de particules ayant une taille d₅₀ comprise entre 0,3 µm et 2µm et une forme sphérique;
- entre 10% et 15%, de préférence de 12% de composé mixte (Ba_{0,9}Eu_{0,1})MgAl₁₀O₁₇ - alumine alpha composée essentiellement de particules ayant une taille d₅₀ comprise entre 0,3 µm et 2µm et une forme sphérique,
- et le complément étant du composé mixte Y₂O₃ :Eu³⁺ - alumine alpha composée essentiellement de particules ayant une taille d₅₀ comprise entre 0,3 µm et 2µm et une forme sphérique.

## Revendications

1. Procédé de préparation d'une alumine du type alpha composée essentiellement de particules ayant une taille d₅₀ comprise entre 0,3 µm et 2µm et une forme substantiellement sphérique comprenant les opérations suivantes :
- on mélange de l'alumine gamma obtenu par la voie alun, un agent de frittage et des germes d'alumine alpha,
- on calcine le mélange dans un four à une température comprise entre 1150°C et 1400°C, notamment 1350°C, pendant une durée comprise entre 1h à 6h, notamment 2h,
- on broie le mélange calciné,
- on passe le mélangé broyé au travers d'une grille en matière non contaminante de tamis entre 150µm et 250µm, notamment de 200µm.

2. Procédé selon la revendication 1, dans lequel l'agent de frittage est du NH₄F.

3. Procédé selon la revendication 2, dans lequel le mélange est composé en proportions de poids 85 à 95 % d'alumine gamma obtenu par la voie alun, de 2,5 à 13% d'alumine alpha et de 0,4 à 1,8% de NH₄F.

4. Procédé selon la revendication 3, dans lequel le mélange est composé en proportions de poids d'environ 93,5 % d'alumine gamma obtenu par la voie alun, d'environ 5,5 % d'alumine alpha et d'environ 1 % de NH₄F.

5. Procédé selon l'une quelconque des revendications 1 à 4, dans lequel on broie le mélange calciné dans un broyeur à boulets avec des billes de broyage en alumine au moins vingt fois supérieur en quantité au mélange calciné pendant 16h.

6. Procédé selon l'une quelconque des revendications 1 à 5, dans lequel les billes de broyage en alumine ont un diamètre de l'ordre du cm, notamment entre 3cm et 5cm.

## Patentansprüche

1. Verfahren zur Herstellung eines Aluminiumoxids vom alpha-Typ, das im Wesentlichen aus Teilchen mit einer Größe d₅₀ zwischen 0,3 µm und 2 µm besteht die weitgehend kugelförmig sind, mit den folgenden Arbeitsgängen:
- man mischt auf der Alaun-Route erhaltenes gamma-Aluminiumoxid mit einem Sintermittel und alpha-Aluminiumoxid-Keimen,
- man calciniert die Mischung in einem Ofen bei einer Temperatur zwischen 1150 °C und 1400 °C, insbesondere 1350 °C, über einen Zeitraum zwischen 1 h bis 6 h, insbesondere 2 h,
- man mahlt die calcinierte Mischung,
- man führt die gemahlene Mischung durch ein Gitter aus nichtkontaminierendem Material mit einer Maschengröße zwischen 150 µm und 250 µm, insbesondere 200 µm.

2. Verfahren nach Anspruch 1, wobei es sich bei dem Sintermittel um NH₄F handelt.

3. Verfahren nach Anspruch 2, wobei die Mischung in Gewichtsanteilen aus 85 bis 95 % auf der Alaun-Route erhaltenem gamma-Aluminiumoxid, 2,5 bis 13 % alpha-Aluminiumoxid und 0,4 bis 1,8 % NH₄F besteht.

4. Verfahren nach Anspruch 3, wobei die Mischung in Gewichtsanteilen aus ungefähr 93,5 % auf der Alaun-Route erhaltenem gamma-Aluminiumoxid, ungefähr 5,5 % alpha-Aluminiumoxid und ungefähr 1 % NH₄F besteht.

5. Verfahren nach einem der Ansprüche 1 bis 4, wobei man die calcinierte Mischung in einer Kugelmühle mit Aluminiumoxid-Mahlkugeln in einer Menge von mindestens dem Zwanzigfachen der calcinierten Mischung über einen Zeitraum von 16 h mahlt.

6. Verfahren nach einem der Ansprüche 1 bis 5, wobei die Aluminiumoxid-Mahlkugeln einen Durchmesser im Zentimeterbereich, insbesondere zwischen 3 cm und 5 cm, aufweisen.

## Claims

1. Process for the preparation of an alumina of the α type essentially composed of particles having a d₅₀ size of between 0.3 microns and 2 microns and a substantially spherical shape, comprising the following operations:
- γ-alumina obtained by the alum route, a sintering agent and α-alumina seeds are mixed,
- the mixture is calcined in a furnace at a temperature of between 1150°C and 1400°C, in particular 1350°C, for a period of time of between 1 h and 6 h, in particular 2 h,
- the calcined mixture is ground,
- the ground mixture is passed through a screen made of noncontaminating substance with a sieve between 150 microns and 250 microns, in particular of 200 microns.

2. Process according to Claim 1, in which the sintering agent is NH₄F.

3. Process according to Claim 2, in which the mixture is composed in proportions by weight of 85% to 95% of γ-alumina obtained by the alum route, of 2.5% to 13% of α-alumina and of 0.4% to 1.8% of NH₄F.

4. Process according to Claim 3, in which the mixture is composed in proportions by weight of approximately 93.5% of γ-alumina obtained by the alum route, of approximately 5.5% of α-alumina and of approximately 1% of NH₄F.

5. Process according to any one of Claims 1 to 4, in which the calcined mixture is ground in a ball mill for 16 h with alumina grinding balls at least twenty times greater in amount than the calcined mixture.

6. Process according to any one of Claims 1 to 5, in which the alumina grinding balls have a diameter of the order of a cm, in particular between 3 cm and 5 cm.
